# EUROPEAN PATENT APPLICATION

(11) **EP 3 739 397 A1**
(43) Date of publication of application: **18.11.2020**
(21) Application number: 19175250.0
(22) Date of filing: 17.05.2019
(51) Int. Cl.: G05B 13/04

(54) **METHOD AND SYSTEM FOR PRODUCING A POLYMER PRODUCT WITHIN A HIGH-FREQUENCY PRODUCTION PLANT**

(71) Applicant: Covestro Deutschland AG, 51373 Leverkusen (DE)
(72) Inventor: The designation of the inventor has not yet been filed
(74) Representative: Levpat

(57) **Abstract**

A method for producing a polymer product in a production plant, preferably in a high-frequency production plant, wherein a system comprises a production plant, a server and a condition computer, wherein the server comprises a platform, a function engine and a value engine. The method comprises a first cycle in which
a) the platform sends production data to the function engine,
b) the function engine uses the production data to determine a production function and sends the production function to the value engine,
c) the condition computer sends a production condition to the value engine,
d) the value engine uses the production function and the production condition to extract a production value from the production function,
e) the value engine sends the production value to the production plant in order to produce the polymer product according to the production value.

The steps of a) to e) are repeated after the first cycle and constitute a repeating cycle, wherein the production value of step d) of the first cycle serves as an additional input for the repeating cycle.

## Description

The invention relates to a method and a system for producing a polymer product in a production plant, preferably in a high-frequency production plant, wherein a system comprises a production plant including a production line, a server and a condition computer, wherein the server comprises a platform communicating with external computers.

Such a method and a system are known from EP 1 364 262 B1. Here, the system comprises a chemical production plant including a production line and a server called computer system. An external production computer of a customer of the production plant sends external product information - comprising in particular a production volume of a certain chemical product - to a platform of the system. The platform is a customer ordering system, is a part of the computer system and sends production data to the computer system. Beneath the platform, the computer system has a plurality of inputs like sensor outputs, equipment controls and the like. The computer system then calculates, for example by using data of a flow rate sensor of the chemical production plant, a certain production function. This production function is concretized via production conditions/constraints like availability of raw materials to extract a targeted production value. The production value may be, for example, a flow rate of the chemical product within the production line. This production value is used for an according control command to the production line, thereby completing a cycle. After completing the cycle, the next cycle can be started in order to re-determinate the production value for providing continuous control of the chemical production plant.

A re-determination of the production value only takes place from time to time and is thus rather low-frequency. A typical time interval between determination and re-determination of the production value is a month. Reason for this is that the polymer products result from continuous chemical processes which are usually more efficient if continuous, non-volatile production conditions/values can be provided. Another reason for this is that re-determination of production values is a very complex task normally comprising dozens or even hundreds of variables which have to be considered. This means that determination of a single production value can last over hours and even days.

However, external parameters delivered by customers or suppliers (for example the production volume or production conditions like the delivery date of a raw material) are very volatile. In addition, they are key factors for determination of the production values. This volatility of external parameters is in contradiction with respect to the above-mentioned preferred continuous production of chemical products.

It is thus the object of the invention to enhance the reactivity of production processes for chemical - in particular polymer - products with respect to the volatility of production data, for example external parameters, without decreasing efficiency of the production processes significantly. It is preferably an object of the invention to increase the ability of the production process to react faster on external parameters in order to change more frequently the according production value/s without decreasing the production efficiency significantly. It is a very preferred object of the invention to achieve a high-frequency and highly efficient production process for producing polymer products.

This object is solved by applying a method for producing a polymer product in a production plant, preferably in a high-frequency production plant, wherein a system comprises a production plant, a server and a condition computer, wherein the server comprises a platform, a function engine and a value engine, wherein the method comprises a first cycle in which
a) the platform sends production data to the function engine,
b) the function engine uses the production data to determine a production function and sends the production function to the value engine,
c) the condition computer sends a production condition to the value engine,
d) the value engine uses the production function and the production condition to extract a production value from the production function,
e) the value engine sends the production value to the production plant in order to produce the polymer product according to the production value, and
wherein the steps of a) to e) are repeated after the first cycle and constitute a repeating cycle, wherein the production value of step d) of the first cycle serves as an additional input for the repeating cycle.

The invention is based on the finding that the use of the production value of the preceding cycle for the determination of the production value of the present cycle provides a closed loop determination. A closed loop determination in turn offers a determination basis and thus a faster, more converging determination of the production value thereby enhancing the speed of the determination. This allows it to react on external parameters like production data on, for example, a daily basis. Even more, it was found that determination speed thereby increases in such an extent that the production plants can be driven volatile on a, for example, daily basis without a significant loss of efficiency. This is due to the higher flexibility of the system allowing additional, short-term compensatory measures. These measures avoid bigger losses of efficiency due to a higher asset utilization.

For example, an external and volatile parameter like the ordered volume of a first polymer product of a certain customer decreases significantly from one day to the next. The server then determines a production function like efficiency of the production plant over the flow rate of the first polymer product. One part of the production data may be that another customer ordered a certain production volume of a second polymer product. The server then may conclude that it is the best solution to produce the first polymer product at a high-level flow rate resulting in an early change within the production plant from the first to the second polymer product. In another situation, the server may decide that it is appropriate to produce the first polymer product on a low-level flow rate while speculating on further orders relating to the first polymer product. This would mean that a change from the first to the second polymer product would occur later.

This highlighted flexibility requires conventionally - this cannot be emphasized sufficiently - an extreme amount of computing power, since even high-performance servers in the form of computer centers need many hours and often days to solve this complex task. Due to the above-mentioned closed loop of the determination of the production value, the cycle time of production value determination decreases in such a manner that the above-mentioned object is solved.

The term "polymer product" preferably means a polymer or an intermediate product for a polymer. The word "server" can be understood as a single computer entity or as a plurality of single computer entities. If the server is a single computer entity having an own housing, the server preferably comprises several software elements representing the platform, the function engine, the value engine and the condition computer. According to one embodiment, the server is a single computer entity within a housing comprising the function engine and the value engine, whereas the condition computer and the platform are realized in separate computer entities. Of course, each engine and each unit could also be realized as single computer entity.

The production plant preferably comprises a production line for producing the polymer product and/or a supply chain for distributing the polymer product to customers. The customers are preferably business customers.

The expression "production line" preferably means installations capable of chain-growth polymerization, polycondensation or polyaddition. This term may also comprise production lines relating to earlier or later production steps. The wording "supply chain" preferably means logistics in order to distribute the polymer product to the customers. The supply chain may comprise reservoirs, pipelines, trucks and/or warehouses and in addition according control elements like valves, sensors and/or control computers. It is possible that the supply chain extends over several companies. The supply chain may comprise a certain amount of the polymer product providing the possibility to comply with a customer order by selling and transporting a fraction of the amount of the polymer product within the supply chain to the customers. The supply chain preferably is a buffer between the production line and the customer.

The term "production value" may refer, in particular, to a flow velocity or a flow rate of the polymer product, a volume of the polymer product per batch or per interval, a price for a certain volume of the polymer product, and/or key properties of the polymer product like hardness or density.

The expression "production function" preferably means a variable depending on the production value or vice versa. For example, the production function is an overall efficiency of the production plant depending on the flow rate or flow velocity of the polymer product. According to another embodiment, the production function can be the asset utilization of a certain part of the production plant over the flow rate of the polymer product. It is also possible that the production function is the price of a certain polymer product over its production volume.

The term "production data" may refer to an order or several orders of external production computer/s and may comprise, for example, a type of a certain polymer product and an according price for a certain volume and/or a delivery date/time. Likewise, the expression "production condition" may comprise a certain volume of a certain type of raw material of a supplier, an according price for this volume and a delivery time/date.

It is advantageous that the repeating cycle is repeated so that a plurality of repeating cycles follows subsequently after the first cycle, wherein preferably the production value of one of the plurality of the repeating cycles serves as additional input for determining the production function/value of the according successive repeating cycle.

According to a very preferred embodiment, the system comprises a data base which contains historical data, wherein it is preferred that the value engine uses the historical data, preferably selected historical data of the historical data as an input for determining the production value. It is preferred that the historical data comprise earlier production data, production functions, production conditions, production values, production value ranges, external product information, external comparison information, external conditions and/or external requests. The database preferably comprises earlier data of the system. It is advantageous that the database comprises historical data of publically available data like commodity prices, weather data, share value data and the like.

It is very advantageous that the value engine comprises a condition unit and an empirical unit. It is preferred that the condition unit receives the production function and the production condition as inputs. Preferably, the condition unit outputs a production value range. The production value range is preferably a cut-out or a modified cut-out of the production function which considers the production condition/s. The production value range may be defined in such a way that the production function is limited to a predetermined span. The predetermined span may be expressed via a lower and a higher threshold. For example, the production function of the overall efficiency of a production plant depending on the flow rate of the polymer product has a lower threshold at 80 % efficiency while the upper threshold is 100 % efficiency. Said efficiency-thresholds may belong to a flow rate of 90 % of a maximum flow rate and to the maximum flow rate itself, respectively. Thus, the product value range of this example covers the upper 10 % of the possible flow rates of the production plant. The production value range is preferably an input of the empirical unit. Preferentially, the empirical unit is connected with the data base, wherein it is preferred that the database serves as an input for the empirical unit. It is preferred that the empirical unit uses the historical data of the database to reduce the production value range to a single production value. It is preferred that the reduction to a single production value is based on a prediction made by the empirical unit based on the historical data of the database.

According to another embodiment, the system does not comprise a database comprising historical data so that the condition unit and the empirical unit can be seen as a single unit forming the value engine. It is possible that the condition unit outputs a single production value and in particular not a production value range. The production value of the value engine is preferably sent to the production plant, and/or to the platform and/or to the function engine.

It is very preferred that the first cycle and/or the repeating cycle lasts at most a month, preferably at most a week and most preferably at most three or two days. Advantageously, the first cycle and/or the repeating cycle lasts at least a minute and more preferably at least an hour. According to the most preferred embodiment, the first cycle and/or the repeating cycle is repeated each day.

According to a very preferred embodiment, the production value of step d) of the first cycle serves as an additional input for determining the production function of step b) of the repeating cycle. It is preferred that the production value of step d) of a certain cycle serves as an additional input for determining the production function of step b) of the following cycle. Advantageously, the production value of the value engine is an input for the function engine. The function engine preferably analyzes the production data of the repeating cycle together with the production value resulting from the first cycle. It is preferred that the function engine generates the production function of a certain cycle by using the production data of this certain cycle together with the production value resulting from the previous cycle.

Preferentially, the value engine sends the production value to the platform. It is preferred that the platform uses the production value as a part or as a basis for a part of a product summary. The product summary can be highlighted, for example, on a webpage like a webshop. According to a preferred embodiment, the server and/or the platform calculates an availability/a delivery time/a delivery date of the polymer product out of the determined flow rate.

It is very preferred that the platform gathers external production information from an external production computer. Preferably, the external production computer is a computing unit of a customer of the production plant. It is preferred that the external production computer has access to the platform, for example to the webshop, and thus preferably has access to the product summary of the platform. It is very preferred that the platform is constructed to provide specific product summaries to the external production computers, wherein a single specific production summary is preferably only visible for a single external production computer/a single customer. Preferentially, the external production computer performs an order comprising external production information. The external production information preferably comprise a certain amount of a certain polymer product of the production plant, a certain delivery date/time and/or a price for the production volume. According to a preferred embodiment, the platform preprocesses said external production information by compressing and/or standardizing, thereby generating production data out of said external production information. According to another embodiment, the platform simply forwards said external production information to the function engine so that said external production information are identical or basically identical with said production data sent to the function engine.

It is very preferred that the condition computer receives an external condition from an external condition computer. Preferably, the external condition computer belongs to a supplier of the production plant. It is advantageous that the condition computer is connected or connectable to a plurality of external condition computers. Preferentially, the condition computer comprises a resource management system for managing of procurement. The condition computer may be a software module within the server or can be a single computing entity with an own housing. It is preferred that the condition computer sends an external request to the external condition computer, thereby ordering a certain resource and in particular a certain raw material. The external condition computer then preferably answers with providing said external condition comprising a confirmation that, for example, a certain amount of a certain raw material can be delivered in a certain, guaranteed delivery time.

According to a very preferred embodiment, the platform gathers external comparison information from an external comparison computer. It is preferred that the platform is connected or connectable to a plurality of external comparison computers. It is very preferred that the external production computer and the external comparison computer each receive a product summary, wherein the two product summaries are different with respect to at least one and preferably to at least two parameters. Advantageously, the external production computer receives a variant A of the product summary, while the external comparison computer receives a variant B of the product summary. For example, both variants A and B refer to the same type of polymer product, but differ with respect to the according volume and the guaranteed delivery time. As an example, variant A of the product summary comprises a higher volume with a longer delivery time while variant B refers to a smaller volume of the polymer product with a shorter delivery time. It is preferred that the platform preprocesses the external production information and the external comparison information and sends these preprocessed production data referring to variant A and B to the function engine. The function engine is very preferably constructed to analyze these production data via an A/B-testing. It is very preferred that the function engine determinates via the A/B testing the customer acceptance regarding to a certain parameter. For example, the function engine determines the acceptance of the customers with respect to the delivery time. It is very preferred that said acceptance of a certain parameter determined by the A/B-testing influences the generation of the production function. For example, a low acceptance of longer delivery times may result in a production function in which lower flow rates experience a higher discrimination.

Preferentially, step b) takes places after step a). However, step c) can take place at any point in time and in particular before steps a) and b) as long as step c) is performed before step d). Preferably, the step of sending historical data from the database to the value engine/the empirical unit can take place before or after steps a), b), and c) as long as it takes place before sending the production value from the value engine/empirical unit to the production plant and/or to the function engine and/or to the platform.

It is preferred that the function engine comprises artificial intelligence and in particular the ability of machine learning. Advantageously, the function engine comprises a neural network, preferably a deep neural network and very preferably a deep recurrent neural network. It is very preferred that the function engine is connected with a control computer of the production plant. Preferably, the function engine has access to all data of the control computer/the production plant.

It is advantageous that the value engine/the condition unit comprises an optimization tool. According to a preferred embodiment, the optimization tool performs integer programming and preferably mixed-integer linear programming. The optimization tool preferably reduces the production function to the production value and the production value range, respectively.

Preferentially, the value engine/the empirical unit comprises artificial intelligence and in particular the ability of machine learning. It is preferred that the value engine/the empirical unit comprises a neural network, preferably a deep neural network and very preferably a deep recurrent neural network. The artificial intelligence of the value engine/the empirical unit is preferentially constructed to analyze historical data of the database in order to make a prediction regarding the most successful production value of the production value range resulting from the condition unit.

The invention also teaches a system for producing a polymer product in a production plant, preferably in a high-frequency production plant, wherein the system is preferably constructed to perform the method according to the invention, wherein the system comprises a production plant, a server and a condition computer, wherein the server comprises a platform, a function engine and a value engine, wherein the system is constructed to run a first cycle in which
a) the platform sends production data to the function engine,
b) the function engine uses the production data to determine a production function and sends the production function to the value engine,
c) the condition computer sends a production condition to the value engine,
d) the value engine uses the production function and the production condition to extract a production value from the production function,
e) the value engine sends the production value to the production plant in order to produce the polymer product according to the production value, and
wherein the system is constructed so that the steps of a) to e) are repeated after the first cycle and constitute a repeating cycle, wherein the system is constructed so that the production value of step d) of the first cycle serves as an additional input for the repeating cycle.

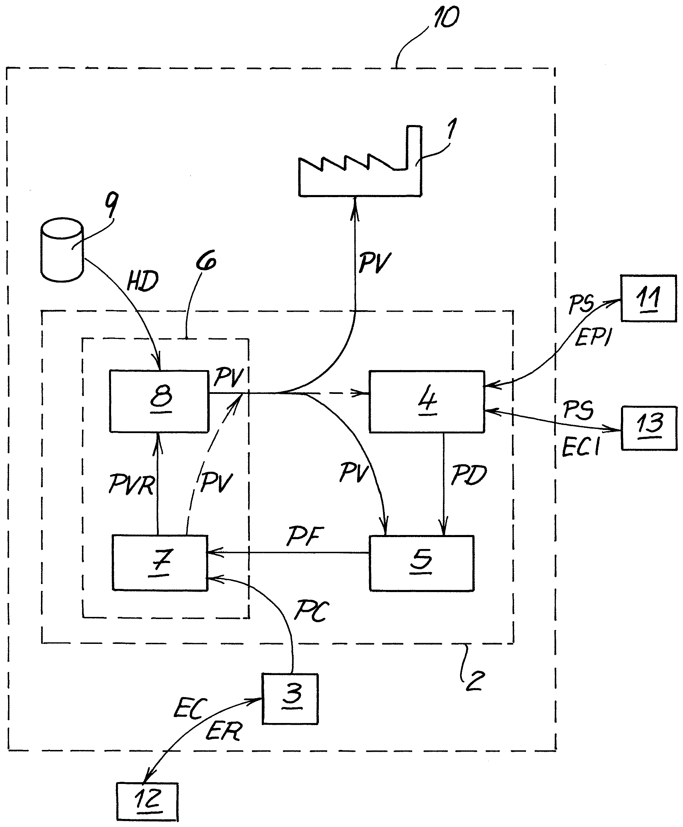

The invention is explained by means of one figure showing a preferred embodiment. The only figure highlights a block diagram of the method and the system for producing a polymer product in a high-frequency production plant according to the invention.

The system 10 of this embodiment comprises a production plant 1 including a production line for producing a polymer product and an according subsequent supply chain for distributing the polymer product. The production line preferably comprises installations for chain polymerization, polyaddition or polycondensation. The supply chain of this embodiment comprises a logistics system which can have one or more warehouses, pipelines, reservoirs and the like. The system 10 further comprises a server 2, a condition computer 3 and preferably a database 9. The server 2 comprises a platform 4, a function engine 5 and a value engine 6. The value engine 6 itself is divided into a condition unit 7 and a historical unit 8. The platform 4 may be constructed as a webshop which is connected or connectable to an external production computer 11 and to an external comparison computer 13.

The platform 4 offers certain types of polymer products within the webshop. Each type of polymer product comes with a certain volume which is available within a certain delivery time. These data are summarized to a product summary PS and highlighted on the platform 4. The external production computer 11 then orders a certain amount of a certain polymer product which has to be delivered within a guaranteed delivery time. These information are bundled and sent as external production information EPI to the platform 4. The platform 4 preferably processes the incoming external production information EPI from one or more external production computers 11, compresses and standardizes them thereby forming production data PD which are sent to the function engine 5. The function engine 5 may also receive a production value PV, which is explained later on.

The function engine 5 receives the production data PD and the production value PV and processes them thereby generating a production function as an output of the function engine 5. The production value PV may be, for example, a flow rate of the produced polymer product of a preceding cycle or a predetermined starting value of the flow rate. The flow rate may represent a volume of the produced polymer product per time, for example measured in like per second. The function engine according to this embodiment comprises artificial intelligence which is capable of deep learning. The function engine 5 in particular may comprise a deep recurrent neural network which is able to be trained in order to provide a continuous improvement on the learning results. The function engine 5 of this embodiment may generate a function comprising the overall efficiency of the production plant 1 over the flow rate of the polymer product produced within of the production plant 1.

This function preferably depends on very many inputs beyond the production data PD and the production value PV. In fact, it may depend on a certain maximum flow rate of the production plant 1 and on characteristics of the production line and/or the supply chain. For example, some production lines can be easily shut down, thereby reducing the efficiency of the production plant 1 only in a small amount. Other production lines are more efficient if they are driven on a low, but continuous level. The function engine 5 is fed with all these inputs and finally provides the above-mentioned production function PF. This production function PF in particular may comprise one or more areas with a relatively high efficiency and one or more areas with a relatively low efficiency.

The condition computer 3 can be a certain software like a resource management system for procurement which is able to communicate with external condition computers 12 of, for example, suppliers of the production plant 1. According to a typical situation, the production plant 1 realizes the need of further delivery of a certain raw material. The production plant 1 then sends this information to the condition computer 3 which in turn sends an external request ER to the external condition computer 12. The external requests ER may comprise the volume of the needed raw material as well as a certain, preferred delivery date. The external condition computer 12 responses to the external request ER with an external condition EC comprising the preferred volume of the raw material and with a delivery date. The condition computer 3 then processes this external condition EC and sends the most relevant information of this external condition EC preferably in a compressed and standardized form called production condition PC to the server 2/the value engine 6/the condition unit 7.

The condition unit 7 of this embodiment receives the production function PF as well as the production condition PC and provides a production value range PVR as an output. The production value range PVR comprises a certain range of production values PV which can be, in particular, a cut-out of the production function PF. The condition unit 7 preferably comprises an optimization tool which considers the production conditions PC thereby reducing the production function PF to a certain range of possible production values PVR. Thus, the output of the condition unit 7 of this embodiment is basically a possible range of flow rates of the production plant 1 which are allocated to different efficiencies of the production plant 1. The optimization tool of the condition unit 7 comprises, for example, mixed-integer linear programming in order to represent the production conditions PC within the production function PF by reducing the production function PF to the production value range PVR.

The production value range PVR is then sent to the empirical unit 8 which has access to the data base 9 and its historical data HD. The historical data HD basically represent the memory of the system 10 and contains data relating to past orders of external production computers 11, past supplier interactions with external condition computers 12 and past publicly available data like commodity prices. It is preferred that the empirical unit 8 comprises artificial intelligence which is capable of deep learning. Preferably, the historical unit 8 comprises a neural network and in particular a deep recurrent neural network.

Generally spoken, the artificial intelligence of the historical unit 8 learns on the basis of the historical data HD to make predictions. Efficiencies of the single production values PV of the production value range PVR only defer from each other within a certain, predetermined range of, for example, 5 %. It was found that the selection of a single production value out of the production value range PVR based on a prediction is usually more result-oriented than just choosing the production value PV with the highest efficiency. For example, the artificial intelligence of the empirical historical unit 8 recognized that certain situations imply to be more careful and thus imply to run the production plant 1 with a lower flow rate of the polymer product. It may be that the artificial intelligence of the empirical unit 8 realized that the behavior of the external condition computers 12 imply an upcoming shortage of a certain raw material which makes a reduction of the flow rate of the polymer product advantageous. The empirical unit 8 then sends the production value PV in the form of the flow rate of the polymer product to the production plant 1 which in turn reduces the flow rate of the polymer product accordingly.

The empirical unit 8 and the value engine 6, respectively, sends the production value PV in the form of the reduced flow rate to the function engine 5. The function engine 5 evaluates the reduced flow rate together with new production data PD from an external production computer 11 and might come to the conclusion that it is useful to adapt the new production function PF accordingly. This step marks the beginning of a new, repeating cycle.

According to another embodiment, the condition unit 7 does not provide a production value range PVR as an output but instead a single production value PV. Thus, the output of the condition unit 7 of this embodiment (symbolized with a dashed arrow within the value engine 6) is directly sent to the production plant 1 and the function engine 5.

With respect to a preferred embodiment, the production value PV of the value engine 6 is also sent to the platform 4 which is also highlighted with a dashed arrow. If, for example, the production value PV is a reduced flow rate, the platform 4 may consider this and may adapt the availability or guaranteed delivery time of the according polymer product in an appropriate manner. The product summary PS is therefore updated accordingly based on the production value PV.

According to a further preferred embodiment, the platform 4 communicates with at least one external comparison computer 13 which may belong to another customer. The external comparison computer 13 receives a product summary PS and responds with external comparison information ECI which basically comprise the same data types like the external product information EPI and thus a certain polymer product, a certain product volume and a certain delivery date/time. In this particular case, the product summary sent to the external production computer 11 is slightly different with respect to the product summary sent to the external comparison computer 13. Within this example, both product summaries refer to the same polymer product type but have different volumes and different delivery times. Here, one product summary PS might have a higher product volume and a higher delivery time than the other.

Both, the external product information EPI and the external comparison information ECI are then sent to the platform 4 which may process them further. In particular, the platform 4 allocates the external product information EPI and the external comparison information ECI and sends this allocation within the production data PD to the function engine 5. The function engine 5 analyzes the external production information EPI and the external comparison information ECI via A/B-testing. The result of the A/B-testing of this example represents the acceptance of customers depending on different delivery times which also impacts the generation of the production function PF. Thus, the function engine 5 considers the acceptance of the customers with respect to availability of a certain polymer product. For example, a high acceptance of longer lasting delivery times may result in a discrimination of higher flow rates within the production function PF.

## Claims

1. Method for producing a polymer product in a production plant (1), preferably in a high-frequency production plant, wherein a system (10) comprises a production plant (1), a server (2) and a condition computer (3), wherein the server (2) comprises a platform (4), a function engine (5) and a value engine (6), wherein the method comprises a first cycle in which
f) the platform (4) sends production data (PD) to the function engine (5),
g) the function engine (5) uses the production data (PD) to determine a production function (PF) and sends the production function (pf) to the value engine (6),
h) the condition computer (3) sends a production condition (PC) to the value engine (6),
i) the value engine (6) uses the production function (PF) and the production condition (PC) to extract a production value (PV) from the production function (PF),
j) the value engine (6) sends the production value (PV) to the production plant (1) in order to produce the polymer product according to the production value (PV), and
wherein the steps of a) to e) are repeated after the first cycle and constitute a repeating cycle, wherein the production value (PV) of step d) of the first cylcle serves as an additional input for the repeating cycle.

2. Method according to claim 1, wherein the system comprises a database (9) which contains historical data (HD), wherein it is preferred that the value engine (6) uses selected historical data (HD) as an input for determining the production value (PV).

3. Method according to one of the claims 1 or 2, wherein the value engine (6) comprises a condition unit (7) and an empirical unit (8).

4. Method according to one of the claims 1 to 3, wherein the first cycle lasts at most a month, preferably at most a week.

5. Method according to claims 1 to 4, wherein the production value (PV) of step d) of the first cycle serves as an additional input for determining the production function (PF) of step b) of the repeating cycle.

6. Method according to claims 1 to 5, wherein the value engine (6) sends the production value (PV) to the platform (4).

7. Method according to one of the claims 1 to 6, wherein the platform (4) gathers external production information (EPI) from an external production computer (11).

8. Method according to one of the claims 1 to 7, wherein the condition computer (3) receives an external condition (EC) from an external condition computer (12).

9. Method according to one of the claims 1 to 8, wherein the platform (4) gathers external comparison information (ECI) from an external comparison computer (13).

10. Method according to one of the claims 1 to 9, wherein the function engine (5) comprises artificial intelligence.

11. Method according to one of the claims 1 to 10, wherein the value engine (6) comprises an optimization tool.

12. Method according to one of the claims 1 to 11, wherein the value engine (6) comprises artificial intelligence.

13. System (10) for producing a polymer product in a production plant, preferably in a high-frequency production plant, wherein the system (10) is preferably constructed to perform a method according to one of the claims 1 to 12, wherein the system (10) comprises a production plant (1), a server (2) and a condition computer (3), wherein the server (2) comprises a platform (4), a function engine (5) and a value engine (6), wherein the system (10) is constructed to run a first cycle in which
a) the platform (4) sends production data (PD) to the function engine (5),
b) the function engine (5) uses the production data (PD) to determine a production function (PF) and sends the production function (PF) to the value engine (6),
c) the condition computer (3) sends a production condition (PC) to the value engine (6),
d) the value engine (6) uses the production function (PF) and the production condition (PC) to extract a production value (PV) from the production function (PF),
e) the value engine (6) sends the production value (PV) to the production plant (1) in order to produce the polymer product according to the production value (PV), and
wherein the system is constructed so that the steps of a) to e) are repeated after the first cycle and constitute a repeating cycle, wherein the system is constructed so that the production value (PV) of step d) of the first cycle serves as an additional input for the repeating cycle.
